# EUROPEAN PATENT APPLICATION

(11) **EP 4 496 065 A1**
(43) Date of publication of application: **22.01.2025**
(21) Application number: 24185522.0
(22) Date of filing: 28.06.2024
(51) Int. Cl.: H01M 10/0587, H01M 50/103, H01M 50/586, H01M 50/593, H01M 10/0525

(54) **ELECTROCHEMICAL DEVICE AND ELECTRONIC DEVICE**

(30) Priority: 17.07.2023 CN 202310875595
(71) Applicant: Ningde Amperex Technology Ltd., Ningde City, Fujian 352100 (CN)
(72) Inventor: MA, Wentao, Ningde City, Fujian Province, People s Republic of China, 352100 (CN); XIA, Hengtao, Ningde City, Fujian Province, People s Republic of China, 352100 (CN)
(74) Representative: Icosa

(57) **Abstract**

An electrochemical device (100) includes a housing (10) and an electrode assembly (20) disposed in the housing (10). The electrode assembly (20) is a flat jellyroll structure and includes a first electrode plate (21). The first electrode plate (21) includes a first current collector (210), a first active material layer (211), and a second active material layer (212). The first current collector (210) includes an inner surface oriented toward a winding center axis of the electrode assembly (20) and an outer surface oriented away from the inner surface. At least a part of the inner surface is coated with the first active material layer (211). At least a part of the outer surface is coated with the second active material layer (212). An outermost coil of the electrode assembly (20) is the first electrode plate (21). The outermost first electrode plate (21) includes an ending straight section (2104) and a first bent section (2101). The first bent section (2101) is disconnected from the ending straight section (2104). An inner surface of the first bent section (2101) is coated with the first active material layer (211). An outer surface of the first bent section (2101) is coated with a first bonding layer (50). The first bonding layer (50) extends to an outer surface of the ending straight section (2104). The first bonding layer (50) connects the first bent section (2101) and the ending straight section (2104). This application can improve the mechanical shock resistance of the electrochemical device (100).

## Description

### TECHNICAL FIELD

This application relates to the technical field of energy storage, and in particular, to an electrochemical device and an electronic device containing the electrochemical device.

### BACKGROUND

With popularization of consumer electronics products such as a notebook computer, a mobile phone, a handheld game console, a tablet computer, a mobile power supply, and an unmanned aerial vehicle, people are posing higher requirements on an electrochemical device (such as a lithium-ion battery).

The electrochemical device typically includes a housing and an electrode assembly disposed in the housing. An electronic product in use is usually prone to mechanical abuse such as drop, impact, and vibration, thereby possibly causing damage to or failure of an electrode assembly inside the electrochemical device, and reducing reliability and lifespan of the electrochemical device.

### SUMMARY

In view of the above disadvantages, it is necessary to provide an electrochemical device that improves the mechanical shock resistance.

Further, this application provides an electronic device containing the electrochemical device.

A first aspect of this application provides an electrochemical device, including a housing and an electrode assembly disposed in the housing. The electrode assembly is a flat jelly-roll structure and includes a first electrode plate, a second electrode plate, and a separator disposed between the first electrode plate and the second electrode plate. The first electrode plate includes a first current collector, a first active material layer, and a second active material layer. The first current collector includes an inner surface oriented toward a winding center axis of the electrode assembly and an outer surface oriented away from the inner surface. At least a part of the inner surface is coated with the first active material layer. At least a part of the outer surface is coated with the second active material layer. An outermost coil of the electrode assembly is the first electrode plate. The outermost first electrode plate includes an ending straight section and a first bent section adjacent to the ending straight section. The first bent section is disconnected from the ending straight section. An inner surface of the first bent section is coated with the first active material layer. An outer surface of the first bent section is coated with a first bonding layer. The first bonding layer extends to an outer surface of the ending straight section. The first bonding layer connects the first bent section and the ending straight section.

In this application, the first bonding layer can play the role in insulating and protecting the exposed outer surface of the first bent section. The first bonding layer can absorb a part of the impact force caused by mechanical abuse of the electrochemical device, thereby reducing the risk of tearing the first bent section in the case of mechanical abuse, and in turn, reducing the risk that the torn first bent section pierces the separator and is short-circuited with the second electrode plate in contact. In this way, the mechanical shock resistance of the electrochemical device is increased, and the reliability and lifespan of the electrochemical device are improved. Further, the first bonding layer is configured to connect the first bent section and the ending straight section, and the first bonding layer also serves as an ending adhesive, thereby reducing the risk of positional movement of the ending straight section, and in turn, improving the compactness of the electrode assembly.

In some possible embodiments, the outermost first electrode plate further includes a second bent section connected to the ending straight section. The inner surface of the second bent section is not coated with the first active material layer. An outer surface of the second bent section is not coated with the second active material layer. The outer surface of the second bent section is coated with a second bonding layer. The second bonding layer can play the role in insulating and protecting the exposed outer surface of the second bent section. The second bonding layer can absorb a part of the impact force caused by mechanical abuse of the electrochemical device, thereby reducing the risk of tearing the second bent section in the case of mechanical abuse, and in turn, reducing the risk that the torn second bent section pierces the separator and is short-circuited with the second electrode plate in contact.

In some possible embodiments, the second bonding layer extends to the outer surface of the ending straight section. This can reduce the risk of detachment of the second bonding layer due to a high curvature of the second bent section, and increase the bonding stability of the second bonding layer.

In some possible embodiments, the inner surface of the second bent section is coated with a third bonding layer. The third bonding layer can play the role in insulating and protecting the exposed inner surface of the second bent section, thereby further reducing the risk of tearing the second bent section in the case of mechanical abuse of the electrochemical device.

In some possible embodiments, the third bonding layer extends to an inner surface of the ending straight section. This can reduce the risk of detachment of the third bonding layer due to a high curvature of the second bent section, and increase the bonding stability of the third bonding layer.

In some possible embodiments, a filler is disposed between the electrode assembly and the housing. The filler includes an aerogel block and a free electrolyte solution absorbed by the aerogel block. A compressive elastic modulus K of the filler satisfies: 0.5 MPa ≤ K. Therefore, when the electrochemical device is mechanically abused, on the one hand, due to the high void fraction of the aerogel block, the aerogel block can absorb the free electrolyte solution originally filling the clearance between the electrode assembly and the housing, thereby reducing the impact of the free electrolyte solution on the electrode assembly in the case of mechanical abuse of the electrochemical device. On the other hand, the filler can act as a cushion due to a high compressibility, thereby absorbing a part of the impact energy and reducing the risk of damage to the electrode assembly. In addition, when the compressive elastic modulus K satisfies the above condition, the filler reduces the risk that the free electrolyte solution absorbed by the aerogel block is extruded in the case of mechanical abuse of the electrochemical device due to a relatively large amount of deformation of the filler of a small compressive elastic modulus.

In some possible embodiments, 0.5 MPa ≤ K < 2 MPa, thereby reducing the risk that the amount of deformation of the filler of a large compressive elastic modulus is relatively small and fails to maintain a desired cushioning effect when the electrochemical device is mechanically abused.

In some possible embodiments, in a direction of the winding center axis, the filler is disposed between a top of the electrode assembly and the housing to cushion the impact on the top of the electrode assembly. In some possible embodiments, in a direction of the winding center axis, the filler is disposed between a bottom of the electrode assembly and the housing, thereby cushioning the impact on the bottom of the electrode assembly.

In some possible embodiments, viewed from a direction of the winding center axis, a length of the first bonding layer located in the ending straight section is not more than 5 mm, and a length of the second bonding layer located in the ending straight section is not more than 5 mm. Such settings can reduce the adverse effect of the first bonding layer or the second bonding layer on the thickness of the electrode assembly, and therefore, reduce the adverse effect of the first bonding layer or the second bonding layer on the energy density of the electrochemical device.

In some possible embodiments, the outermost first electrode plate further includes a straight connecting section connected to both the first bent section and the second bent section. The third bonding layer extends to an inner surface of the straight connecting section. In a thickness direction of the electrode assembly, a tail portion of the second electrode plate in a winding direction of the electrode assembly overlaps the third bonding layer located in the straight connecting section. In this way, the third bonding layer can cover the tail portion of the second electrode plate in the winding direction, thereby reducing the risk that the burrs at the tail portion of the second electrode plate pierce the separator and are short-circuited with the first electrode plate in contact.

In some possible embodiments, a tail portion of the first active material layer in the winding direction is located in the straight connecting section. The third bonding layer located in the straight connecting section further extends to the tail portion of the first active material layer. Therefore, even if the tail portion of the active material layer (for example, a fourth active material layer) opposite to the first active material layer in the second electrode plate does not extend beyond the tail portion of the first active material layer in the winding direction, lithium ions deintercalated from the first active material layer can still be sufficiently received by the fourth active material layer, thereby reducing the risk that excess lithium ions are accumulated and produce lithium dendrites.

In some possible embodiments, viewed from a direction of the winding center axis, a length of the third bonding layer located on the first active material layer is not more than 2 mm. This reduces the active material covered by the third bonding layer and hardly capable of increasing the capacity, and in turn, reducing the adverse effect of the third bonding layer on the capacity of the electrochemical device.

In some possible embodiments, a mass of the electrode assembly is greater than or equal to 60 grams. An area of the first bonding layer is defined as S1, an area of the second bonding layer is defined as S2, and an outer peripheral area of the outermost first electrode plate is defined as S0, satisfying: 15% ≤ S1/S0 ≤ 30%, and/or 30% ≤ (S1 + S2)/S0 ≤ 60%. In this way, even when the mass of the electrode assembly is relatively large, the first bonding layer and the second bonding layer can sufficiently protect the outer surface of the first bent section and the outer surface of the second bent section respectively, so as to reduce the risk of tearing and reduce the adverse effect caused by a high percentage of adhesive onto the energy density of the electrochemical device.

In some possible embodiments, a mass of the electrode assembly is less than 60 grams. An area of the first bonding layer is defined as S1, an area of the second bonding layer is defined as S2, and an outer peripheral area of the outermost first electrode plate is defined as S0, satisfying: 5% ≤ S1/S0 < 15%, and/or 10% ≤ (S1 + S2)/S0 < 30%. In this way, the first bonding layer and the second bonding layer can also sufficiently protect the outer surface of the first bent section and the outer surface of the second bent section respectively, so as to reduce the risk of tearing and reduce the adverse effect caused by a high percentage of adhesive onto the energy density of the electrochemical device.

A second aspect of this application further provides an electronic device. The electronic device includes an accommodation chamber and the electrochemical device disclosed above. The electrochemical device is disposed in the accommodation chamber. The electronic device is powered by the electrochemical device, and exhibits a relatively high mechanical shock resistance.

### BRIEF DESCRIPTION OF DRAWINGS

The above and/or additional aspects and advantages of this application will become evident and easily comprehensible through the description of some embodiments with reference with the drawings outlined below:
FIG. 1 is an schematic structural diagram of an electrochemical device according to an embodiment of this application;
FIG. 2 is a cross-sectional view of the electrochemical device shown in FIG. 1 sectioned along an II-II line according to some embodiments;
FIG. 3 is a cross-sectional view of the electrochemical device shown in FIG. 1 according to some other embodiments;
FIG. 4 is a cross-sectional view of the electrochemical device shown in FIG. 1 according to still some other embodiments;
FIG. 5 is a schematic structural diagram of an electrochemical device according to another embodiment of this application; and
FIG. 6 is a schematic structural diagram of an electronic device according to an embodiment of this application.

This application is further described below with reference to the following specific embodiments and the foregoing drawings.

### DETAILED DESCRIPTION OF EMBODIMENTS

The following describes the technical solutions in the embodiments of this application clearly and thoroughly. Evidently, the described embodiments are merely a part of but not all of the embodiments of this application. Unless otherwise defined, all technical and scientific terms used herein bear the same meanings as what is normally understood by a person skilled in the technical field of this application. The terms used in the specification of this application are merely intended to describe specific embodiments but not to limit this application.

The following describes the embodiments of this application in detail. However, this application may be embodied in many different forms, and is in no way construed as being limited to the illustrative embodiments described herein. Rather, the illustrative embodiments are provided in order to impart this application thoroughly in detail to those skilled in the art.

In addition, for brevity and clarity, the size or thickness of various components and layers in the drawings may be scaled up. Throughout the text, the same reference numerical means the same element. As used herein, the term "and/or" includes any and all combinations of one or more related items preceding and following the term. In addition, understandably, when an element A is referred to as "connecting" an element B, the element A may be directly connected to the element B, or an intermediate element C may exist through which the element A and the element B can be connected to each other indirectly.

Further, the term "may" used in describing an embodiment of this application indicates "one or more embodiments of this application".

The technical terms used herein is intended to describe specific embodiments but not intended to limit this application. Unless otherwise expressly specified in the context, a noun used herein in the singular form includes the plural form thereof. Further, understandably, the terms "include", "comprise", and "contain" used herein mean existence of the feature, numerical value, step, operation, element and/or component under discussion, but do not preclude the existence or addition of one or more other features, numerical values, steps, operations, elements, components, and/or any combinations thereof.

Space-related terms, such as "on", may be used herein for ease of describing the relationship between one element or feature and other element (elements) or feature (features) as illustrated in the drawings. Understandably, the space-related terms are intended to include different directions of a device or apparatus in use or operation in addition to the directions illustrated in the drawings. For example, if a device in the drawing is turned over, an element described as "above" or "on" another element or feature will be oriented "under" or "below" the other element or feature. Therefore, the illustrative term "on" includes both an up direction and a down direction. Understandably, although the terms such as first, second, third may be used herein to describe various elements, components, regions, layers and/or parts, such elements, components, regions, layers and/or parts are not limited by the terms. Such terms are intended to distinguish one element, component, region, layer or part from another element, component, region, layer, or part. Therefore, a first element, a first component, a first region, a first layer, or a first part mentioned below may be referred to as a second element, a second component, a second region, a second layer, or a second part, without departing from the teachings of the illustrative embodiments.

In this application, the greater-than, less-than, or not-equal-to design relationships between parameter values allow for a reasonable tolerance of the measuring instrument.

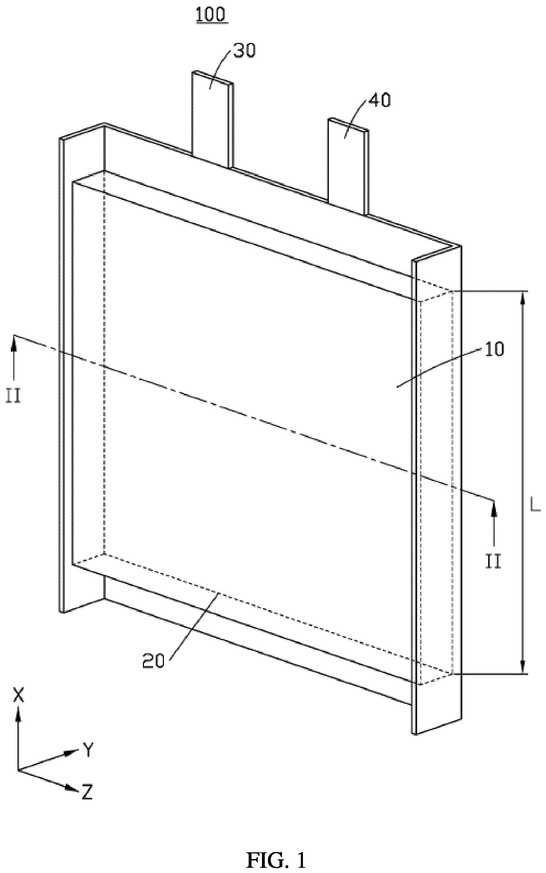

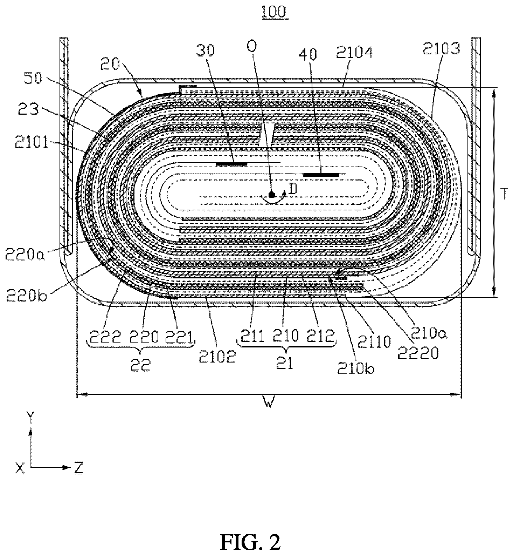

Referring to FIG. 1 and FIG. 2, an embodiment of this application provides an electrochemical device 100, including a housing 10, an electrode assembly 20, and an electrolyte solution (not shown in the drawings), a first conductive plate 30, and a second conductive plate 40. Both the electrode assembly 20 and the electrolyte solution are disposed in the housing 10. The electrode assembly 20 is a flat jelly-roll structure and includes a first electrode plate 21, a second electrode plate 22, and a separator 23 disposed between the first electrode plate 21 and the second electrode plate 22. The separator 23 is configured to prevent direct contact between the first electrode plate 21 and the second electrode plate 22, thereby reducing the risk of a short circuit caused by the contact between the first electrode plate 21 and the second electrode plate 22. The first conductive plate 30 is electrically connected to the first electrode plate 21, and the second conductive plate 40 is electrically connected to the second electrode plate 22. The first conductive plate 30 and the second conductive plate 40 extend out from one end of the housing 10, so as to be connected to an external device (not shown in the drawing).

The housing 10 may be a packaging bag made of an aluminum laminated film. For example, the electrochemical device 100 may be a pouch battery. Alternatively, the electrochemical device 100 may be a steel-shell battery or an aluminum-shell battery. As shown in FIG. 2, the electrode assembly 20 possesses a winding direction D and a winding center axis O perpendicular to the paper plane. The winding direction D is a direction of moving a point on the first electrode plate 21, the separator 23, or the second electrode plate 22 shown in FIG. 2 around the winding center axis O from the inside to the outside. In some embodiments, the winding direction D is a counterclockwise rotation direction. A three-dimensional coordinate system is established based on the mutually perpendicular first direction X, second direction Y, and third direction Z. The first direction X is an extension direction of the winding center axis, and is a direction in which the first conductive plate 30 or the second conductive plate 40 extends out of the electrode assembly 20. The second direction Y is a thickness direction of the electrode assembly 20. The third direction Z is a direction leading from the first conductive plate 30 to the second conductive plate 40. In this application, the term "flat" means that the dimension of the electrode assembly 20 along the third direction Z (that is, the width of the electrode assembly 20) is greater than the dimension along the second direction Y (that is, the thickness of the electrode assembly 20).

As shown in FIG. 2, the first electrode plate 21 includes a first current collector 210, a first active material layer 211, and a second active material layer 212. The first current collector 210 includes an inner surface 210a oriented toward a winding center axis O of the electrode assembly 20 and an outer surface 210b oriented away from the inner surface 210a. At least a part of the inner surface 210a of the first current collector 210 is coated with the first active material layer 211. At least a part of the outer surface 210b is coated with the second active material layer 212. The first electrode plate 21 may be a positive electrode plate or a negative electrode plate. Correspondingly, the first current collector 210 may be a positive current collector or negative current collector, and the first active material layer 211 and the second active material layer 212 may be both positive active material layers or negative active material layers. The second electrode plate 22 includes a second current collector 220, a third active material layer 221, and a fourth active material layer 222. The second current collector 220 includes an inner surface 220a oriented toward the winding center axis O of the electrode assembly 20 and an outer surface 220b oriented away from the inner surface 220a. At least a part of the inner surface 220a of the second current collector 220 is coated with the third active material layer 221. At least a part of the outer surface 220b is coated with the fourth active material layer 222. The second electrode plate 22 may be a negative electrode plate or a positive electrode plate. Correspondingly, the second current collector 220 may be a negative current collector or positive current collector, and the third active material layer 221 and the fourth active material layer 222 may be both negative active material layers or positive active material layers. In some embodiments, the first electrode plate 21 is a positive electrode plate, and the second electrode plate 22 is a negative electrode plate.

The positive current collector may be an aluminum foil or nickel foil, and the negative current collector may be at least one of a copper foil, a nickel foil, or a carbon-based current collector.

The positive active material layer includes a positive active material. The positive active material includes a compound in which lithium ions can be intercalated reversibly and from which lithium ions can be deintercalated reversibly (a lithiated intercalation compound). In some embodiments, the positive active material may include a lithium transition metal composite oxide. The lithium transition metal composite oxide contains lithium and at least one element selected from cobalt, manganese, or nickel. In some embodiments, the positive active material is at least one selected from lithium cobalt oxide (LiCoO₂), lithium nickel-cobalt-manganese ternary material (NCM), lithium manganese oxide (LiMn₂O₄), lithium nickel manganese oxide (LiNi_{0.5}Mn_{1.5}O₄), or lithium iron phosphate (LiFePO₄).

The negative active material layer contains a negative active material, and adopts a negative active material that is known in the art and capable of reversible deintercalation of active ions, without being limited in this application. For example, the negative active material may include, but is not limited to, one of or any combination of graphite, soft carbon, hard carbon, carbon fiber, mesocarbon microbeads, silicon-based material, tin-based material, lithium titanium oxide, or other metals that can combine with lithium into an alloy. The graphite may be one of or any combination of artificial graphite, natural graphite, or modified graphite. The silicon-based material may be one of or any combination of simple-substance silicon, a silicon-oxygen compound, a silicon-carbon composite, a silicon alloy, or the like. The tin-based material may be one of or any combination of simple-substance tin, a tin-oxide compound, a tin alloy, or the like.

The separator 23 includes at least one of polyethylene, polypropylene, polyvinylidene fluoride, polyethylene terephthalate, polyimide, or aramid fiber. For example, the polyethylene includes at least one of high-density polyethylene, low-density polyethylene, or ultra-high-molecular-weight polyethylene. The polyethylene and polypropylene are highly effective in reducing the risk of short circuits, and improve stability of the electrochemical device 100 by virtue of a turn-off effect.

The outermost coil of the electrode assembly 20 is the first electrode plate 21. In some embodiments, along the winding direction D, the outermost first electrode plate 21 includes a first bent section 2101, a straight connecting section 2102, a second bent section 2103, and an ending straight section 2104 that are connected in sequence. The first bent section 2101 and the second bent section 2103 are disposed opposite to each other in a third direction Z. The straight connecting section 2102 and the ending straight section 2104 are disposed opposite to each other in the second direction Y The straight connecting section 2102 and the ending straight section 2104 may be parallel to each other. The first bent section 2101 and the ending straight section 2104 are disposed adjacent to each other, but the first bent section 2101 is not directly connected to the ending straight section 2104. In this application, a demarcation point between two connected sections (for example, the first bent section 2101 and the straight connecting section 2102) of the outermost first electrode plate 21 in the winding direction D is a point at which the slope of the tangent line of the arc constructed from the two sections at the corner is zero. In this application, the outermost coil means the outermost coil of a multi-layer structure with respect to the winding center axis O of the electrode assembly 20, where the multilayer structure is formed by winding, along the winding direction D, a structure stacked from the first electrode plate 21, the separator 23, and the second electrode plate 22. One coil means one circle along the winding direction D from a specified point serving as a start end to another point serving as a terminating end on the first electrode plate 21, where the terminating end, the start end, and the center of the circle are on the same straight line, and the start end is located between the terminating end and the center of the circle.

The inner surface of the first bent section 2101 is coated with a first active material layer 211. The tail portion 2110 of the first active material layer 211 in the winding direction D may be located in the straight connecting section 2102. The outer surface of the first bent section 2101 is not coated with the second active material layer 212. Therefore, the first bent section 2101 is a single-side-coated region, and the electrode assembly 20 ends with the first current collector 210. The first current collector 210 can increase hardness of the electrode assembly 20 and serve to protect the electrode assembly 20, thereby increasing the mechanical shock resistance of the electrode assembly 20. In some embodiments, the inner surface of the ending straight section 2104 adjacent to the first bent section 2101 is not coated with the first active material layer 211. The outer surface of the ending straight section 2104 is not coated with the second active material layer 212. Therefore, the ending straight section 2104 is a blank foil region.

The outer surface of the first bent section 2101 is coated with a first bonding layer 50. The first bonding layer 50 extends to the outer surface of the ending straight section 2104. The first bonding layer 50 connects the first bent section 2101 and the ending straight section 2104. The first bonding layer 50 may be a single-sided tape or a double-sided tape containing an insulation material. The insulation material may be at least one selected from polypropylene, polyethylene, polyvinylidene difluoride, poly(vinylidene fluoride-co-hexafluoropropylene), polymethyl methacrylate, or polyethylene glycol. In other embodiments, the first bonding layer 50 may be a ceramic coating layer instead.

In order to reduce the relative movement of the electrode assembly in the housing, the ending straight section (such as an aluminum foil) is usually bonded to the inner surface of the housing through an adhesive layer. In this case, if the electrochemical device is mechanically abused, the electrode assembly pulls at the ending straight section and tears up the aluminum foil under stress. However, the first bent section is located at a corner of the electrode assembly, and therefore, bears a greater stress and a higher risk of being torn. In this application, the adhesive layer between the electrode assembly 20 and the housing 10 is omitted. Instead, a first bonding layer 50 is disposed on the outer surface of the first bent section 2101. The first bonding layer 50 can play the role in insulating and protecting the exposed outer surface of the first bent section 2101. The first bonding layer 50 can absorb a part of the impact force caused by mechanical abuse of the electrochemical device 100 (for example, in a case that the electrochemical device 100 drops or collides along the third direction Z), thereby reducing the risk of tearing the first bent section 2101 in the case of mechanical abuse, and in turn, reducing the risk that the torn first bent section 2101 pierces the separator 23 and is short-circuited with the second electrode plate 22 in contact. In this way, the mechanical shock resistance of the electrochemical device 100 is increased, and the reliability and lifespan of the electrochemical device are improved. In addition, with the adhesive layer omitted between the electrode assembly 20 and the housing 10, the energy density of the electrochemical device 100 is increased. Further, the first bonding layer 50 is configured to connect the first bonding layer 2101 and the ending straight section 2104, and the first bonding layer 50 also serves as an ending adhesive, thereby reducing the risk of positional movement of the ending straight section 2104, and in turn, improving the compactness of the electrode assembly 20. Therefore, this application can omit the use of the ending adhesive while introducing the first bonding layer 50, and reduce the adverse effect on the energy density of the electrochemical device 100 when the first bonding layer 50 overlaps the ending adhesive.

In some embodiments, the mass of the electrode assembly 20 may be set to be greater than or equal to 60 grams in order to increase the capacity of the electrochemical device 100. Considering that the risk of damage to the electrode assembly 20 is higher if mechanical abuse occurs when the mass of the electrode assembly 20 is relatively large, it is defined that the area of the first bonding layer 50 is S1 and the outer peripheral area of the outermost first electrode plate 21 is S0, satisfying: 15% ≤ S1/S0 ≤ 30%. The S1/S0 ratio reflects a percentage of adhesive on the outermost first electrode plate 21. By setting the range of the percentage of adhesive, when the mass of the electrode assembly 20 is relatively large, the first bonding layer 50 is enabled to sufficiently protect the outer surface of the first bent section 2101, reduce the risk of tearing the first bent section 2101, and also reduce the adverse effect caused by a high percentage of adhesive onto the energy density of the electrochemical device 100.

In some other embodiments, the mass of the electrode assembly may be set to be less than 60 grams. In this case, the areas satisfy: 5% ≤ S1/S0 < 15%. In this way, the first bonding layer 50 is also enabled to sufficiently protect the outer surface of the first bent section 2101, reduce the risk of tearing the first bent section 2101, and also reduce the adverse effect caused by a high percentage of adhesive onto the energy density of the electrochemical device 100.

S0 may be calculated as: s0 = [π × T + 2(W-T)] × L, where T is the thickness of the electrode assembly 20, W is the width of the electrode assembly 20, and L is the length of the electrode assembly 20.

S 1 may be calculated with reference to the specific shape of the first bonding layer 50. For example, when the first bonding layer 50 is rectangular, the length and width of the first bonding layer 50 may be measured separately, and then the product of the length and width of the first bonding layer 50 may be calculated to obtain S1.

The steps of measuring T and W may be: (1) performing a two-dimensional projection and scanning test on the electrochemical device 100 from the first direction X by using an X-ray, so as to obtain a CT image, where the test instrument may be an instrument or device well-known to a person skilled in the art (for example, a GE Phoenixvtomex S device); and (2) measuring the values of T and W directly by using calipers or another appropriate gauge. The steps of measuring the length L of the electrode assembly 20 and the length and width of the first bonding layer 50 may be designed with reference to the measurement steps of T and W.

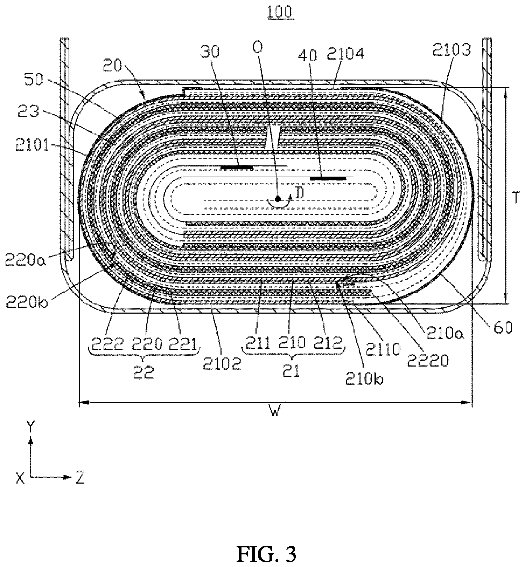

Referring to FIG. 3, in some embodiments, the inner surface of the second bent section 2103 is not coated with the first active material layer 211. The outer surface of the second bent section 2103 is not coated with the second active material layer 212. Therefore, the second bent section 2103 is a blank foil region. The outer surface of the second bent section 2103 is coated with a second bonding layer 60. The second bonding layer 60 may be a single-sided tape or a double-sided tape containing an insulation material. The insulation material may be at least one selected from polypropylene, polyethylene, polyvinylidene difluoride, poly(vinylidene fluoride-co-hexafluoropropylene), polymethyl methacrylate, or polyethylene glycol. In other embodiments, the second bonding layer 60 may be a ceramic coating layer instead. Because the second bonding layer 60 is disposed on the outer surface of the second bent section 2103, the second bonding layer 60 can play the role in insulating and protecting the exposed outer surface of the second bent section 2103. The second bonding layer 60 can absorb a part of the impact force caused by mechanical abuse of the electrochemical device 100 (for example, in a case that the electrochemical device 100 drops or collides along the third direction Z), thereby reducing the risk of tearing the second bent section 2103 in the case of mechanical abuse, and in turn, reducing the risk that the torn second bent section 2103 pierces the separator 23 and is short-circuited with the second electrode plate 22 in contact.

In some possible embodiments, the second bonding layer 60 may extend to the outer surface of the ending straight section 2104. Considering that the radius of curvature of the second bent section 2103 is relatively small, that is, the curvature (degree of bending) of the second bent section 2103 is relatively large, extending the second bonding layer 60 to the outer surface of the ending straight section 2104 can reduce the risk of detachment of the second bonding layer 60 due to a high curvature of the second bent section 2103, that is, increase the bonding stability of the second bonding layer 60. In some specific embodiments, viewed from a direction of the winding center axis O, the length of the first bonding layer 50 located in the ending straight section 2104 is not more than 5 mm, and the length of the second bonding layer 60 located in the ending straight section 2104 is not more than 5 mm. The length specifically means the length of the first bonding layer 50 or the second bonding layer 60 along the winding direction D. Therefore, the above arrange increases the bonding stability of the first bonding layer 50 or the second bonding layer 60, and at the same time, reduces the adverse effect of the first bonding layer 50 or the second bonding layer 60 on the thickness of the electrode assembly 20, thereby reducing the adverse effect of the first bonding layer 50 or the second bonding layer 60 on the energy density of the electrochemical device 100.

In this case, when the mass of the electrode assembly 20 is greater than or equal to 60 grams, the area of the first bonding layer 50 is defined as S 1, the area of the second bonding layer 60 is defined as S2, and the outer peripheral area of the outermost first electrode plate 21 is defined as S0, satisfying: 30% ≤ (S 1 + S2)/S0 ≤ 60%. In this case, by setting an appropriate range of the adhesive percentage, when the mass of the electrode assembly 20 is relatively large, this application enables the first bonding layer 50 and the second bonding layer 60 to sufficiently protect the outer surface of the first bent section 2101 and the outer surface of the second bent section 2103 respectively, so as to reduce the risk of tearing the first bent section 2101 and the second bent section 2103. When the mass of the electrode assembly is less than 60 grams, the areas are set to satisfy: 10% ≤ (S1 + S2)/S0 < 30%.

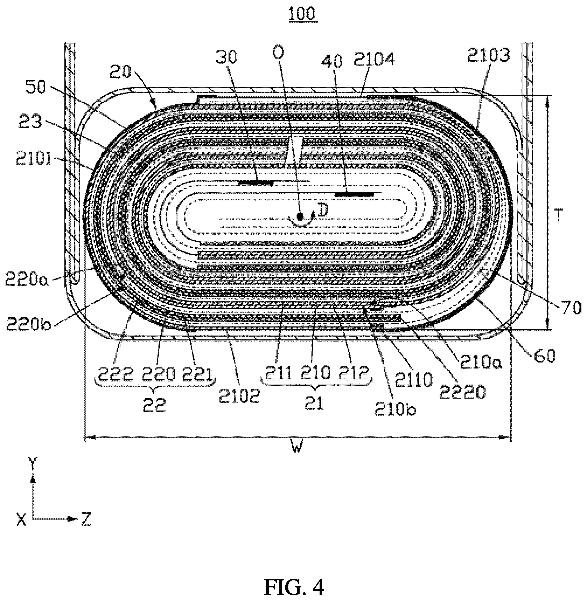

Referring to FIG. 4, in some embodiments, the inner surface of the second bent section 2103 may be further coated with a third bonding layer 70. The third bonding layer 70 may be a single-sided tape or a double-sided tape containing an insulation material. The insulation material may be at least one selected from polypropylene, polyethylene, polyvinylidene difluoride, poly(vinylidene fluoride-co-hexafluoropropylene), polymethyl methacrylate, or polyethylene glycol. In other embodiments, the third bonding layer 70 may be a ceramic coating layer instead. Because the inner surface of the second bent section 2103 is coated with the third bonding layer 70, the third bonding layer 70 can play the role in insulating and protecting the exposed inner surface of the second bent section 2103, thereby further reducing the risk of tearing the second bent section 2103 in the case of mechanical abuse of the electrochemical device 100. In some embodiments, the third bonding layer 70 may extend to the inner surface of the ending straight section 2104, thereby also reducing the risk of detachment of the third bonding layer 70 due to a high curvature of the second bent section 2103, that is, increasing the bonding stability of the third bonding layer 70.

In some embodiments, the third bonding layer 70 may extend to the inner surface of the straight connecting section 2102, thereby further reducing the risk of detachment of the third bonding layer 70 due to a high curvature of the second bent section 2103, that is, further increasing the bonding stability of the third bonding layer 70. In the second direction Y, the tail portion of the second electrode plate 22 in the winding direction D overlaps the third bonding layer 70 located in the straight connecting section 2102. As viewed from the second direction Y, the third bonding layer 70 located in the straight connecting section 2102 covers the tail portion of the second electrode plate 22. Therefore, the third bonding layer 70 can cover the tail portion of the second electrode plate 22 in the winding direction D, thereby reducing the risk that the burrs at the tail portion of the second electrode plate 22 pierce the separator 23 and are short-circuited with the first electrode plate 21 in contact (the burrs may be generated during cutting of the second electrode plate 22, but the source of the burrs are not limited in this application).

In some embodiments, the third bonding layer 70 located in the straight connecting section 2102 may further extend to the tail portion 2110 of the first active material layer 211. In the prior art, when the first electrode plate is a positive electrode plate and the second electrode plate is a negative electrode plate, in order to reduce the risk of accumulation of excessive lithium ions and generation of lithium dendrites on the second electrode plate, the tail portion of the active material layer of the second electrode plate may be set to extend beyond the tail portion of the active material layer of the first electrode plate in the winding direction. In an embodiment of this application, the third bonding layer 70 covers the tail portion 2110 of the first active material layer 211. Even if the tail portion 2220 of the fourth active material layer 222 does not extend beyond the tail portion 2110 of the first active material layer 211 in the winding direction D (for example, due to process errors, or due to overly quick flow of the slurry of the fourth active material layer 222), the lithium ions deintercalated from the first active material layer 211 can still be sufficiently received by the fourth active material layer 222, thereby reducing the risk that excess lithium ions are accumulated and generate lithium dendrites. In some specific embodiments, considering that the first active material layer 211 covered by the third bonding layer 70 fails to contribute to increasing the capacity, the length of the third bonding layer 70 located on the first active material layer 211 is set to be not more than 2 mm when viewed from the direction of the winding center axis O. Therefore, the active material covered by the third bonding layer 70 and scarcely contributing to increasing the capacity is reduced, thereby reducing the adverse effect of the third bonding layer 70 on the capacity of the electrochemical device 100.

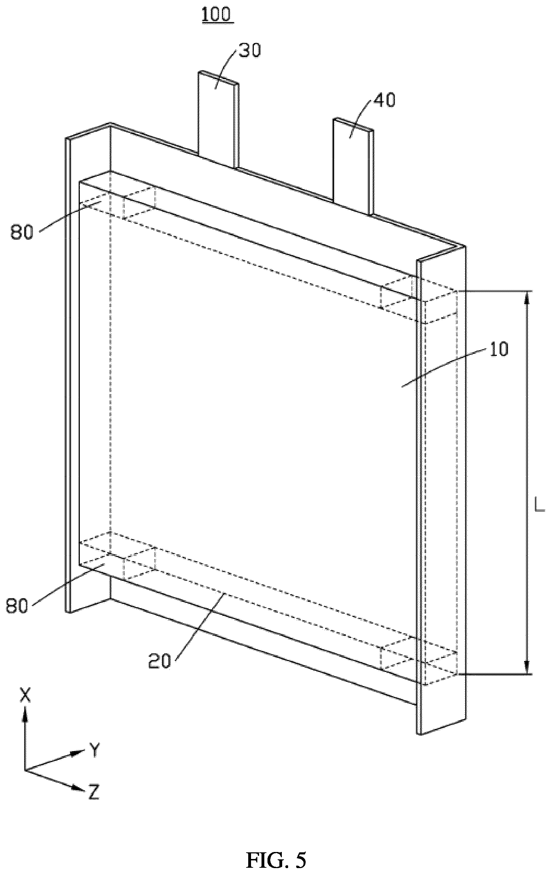

Referring to FIG. 5, in another embodiment, in order to further improve the mechanical shock resistance of the electrochemical device 100, a filler 80 may be further disposed between the electrode assembly 20 and the housing 10. The filler 80 includes an aerogel block and a free electrolyte solution absorbed by the aerogel block. The free electrolyte solution means an electrolyte solution that fills a clearance between the electrode assembly 20 and the housing 10. The aerogel block absorbs the free electrolyte solution to form the filler 80. In a direction of the winding center axis O, the filler 80 is disposed between the top of the electrode assembly 20 and the housing 10, or disposed between the bottom of the electrode assembly 20 and the housing 10. In some specific embodiments, the number of the fillers 80 may be plural. A part of the fillers 80 are disposed between the top of the electrode assembly 20 and the housing 10, and another part of the fillers 80 are disposed between the bottom of the electrode assembly 20 and the housing 10.

The aerogel block added between the electrode assembly 20 and the housing 10 brings the following two beneficial effects when the electrochemical device 100 is mechanically abused (for example, when the electrochemical device 100 drops or collides along the first direction X). One beneficial effect is: on the premise that the volume of the electrochemical device 100 is basically not changed, due to the high void fraction of the aerogel block, the aerogel block can absorb the free electrolyte solution that originally fills the clearance between the electrode assembly 20 and the housing 10, thereby reducing the impact of the free electrolyte solution onto the electrode assembly 20 in the case of mechanical abuse of the electrochemical device 100. On the other hand, the filler 80 can act as a cushion due to a high compressibility, thereby absorbing a part of the impact energy and reducing the risk of damage to the electrode assembly 20. In addition, during the cycling of the electrochemical device 100, the reactive electrolyte solution located between the first electrode piece 21 and the second electrode plate 22 is gradually consumed first, and then the free electrolyte solution absorbed in the aerogel block can penetrate into the clearance between the first electrode plate 21 and the second electrode plate 22 under a penetration action caused by the concentration difference of the electrolyte solution, thereby improving the cycle performance of the electrolyte solution, and in turn, increasing the lifespan of the electrochemical device 100.

The compressive elastic modulus K of the filler 80 satisfies: 0.5 MPa ≤ K, thereby reducing the risk that the free electrolyte solution absorbed by the aerogel block is extruded in the case of mechanical abuse of the electrochemical device 100 due to a relatively large amount of deformation of the filler 80 of a small compressive elastic modulus, and in turn, reducing the impact caused by the extruded free electrolyte solution onto the electrode assembly 20. Further, K may be set to satisfy: 0.5 MPa ≤ K < 2 MPa, thereby reducing the risk that the amount of deformation of the filler 80 of a large compressive elastic modulus is relatively small and fails to maintain a desired cushioning effect when the electrochemical device 100 is mechanically abused.

The compressive elastic modulus K (MPa) may be calculated as: K = (σ₂ - σ₁)/(ε₂ - ε₁). In the formula above, σ₁ denotes a compressive stress (MPa) measured at a specified compressive force. σ₂ denotes a compressive stress (MPa) measured when the compressive force increases to another value. ε₁ denotes a compressive strain measured at the compressive stress σ₁. ε₂ denotes a compressive strain measured at the compressive stress σ₂.

The electrochemical device 100 of this application includes all devices capable of electrochemical reactions. Specifically, the electrochemical device 100 includes all types of primary batteries, secondary batteries, fuel cells, solar cells, and capacitors (such as supercapacitors). Optionally, the electrochemical device 100 may be a lithium secondary battery, including a lithium metal secondary battery, a lithium-ion secondary battery, a lithium polymer secondary battery, and a lithium-ion polymer secondary battery.

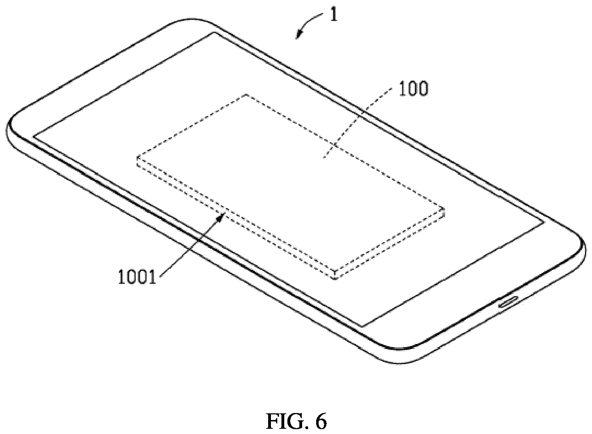

Referring to FIG. 6, an embodiment of this application further provides an electronic device 1. The electronic device includes an accommodation chamber 1001 and the electrochemical device 100. The electrochemical device 100 is disposed in the accommodation chamber 1001. The electronic device 1 is powered by the electrochemical device 100, and the electronic device 1 exhibits a relatively high mechanical shock resistance. In an embodiment, the electronic device 1 according to this application may be, but is not limited to, a laptop computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household storage battery, lithium-ion capacitor, or the like.

The following describes this application in detail with reference to specific embodiments and comparative embodiments. The following describes this application with reference to specific test methods by using a pouch battery as an example of the electrochemical device 100. A person skilled in the art understands that the preparation methods described in this application are merely exemplary, and any other appropriate preparation methods still fall within the scope of this application.

### Embodiment 1

**Preparing a first electrode plate:** Mixing lithium cobalt oxide (LiCoO₂) as a positive active material, conductive carbon black (Super P), carbon nanotubes, and polyvinylidene difluoride (PVDF) at a mass ratio of 97.6: 0.6: 0.5: 1.3, and adding N-methyl pyrrolidone (NMP) as a solvent to form a slurry in which the solid content is 75 wt%, and stirring well. Applying the slurry evenly onto one surface of a 10 µm-thick aluminum foil, and drying the slurry at 90 °C to obtain a first active material layer. Repeating the above steps on the other surface of the aluminum foil to obtain a second active material layer. Performing steps such as cold-pressing and cutting (cutting the electrode plate to the desired size) to obtain a first electrode plate of 1535 mm (length) × 70 mm (width) × 105 µm (thickness) in size. Connecting a first conductive plate onto the first electrode plate.

**Preparing a second electrode plate:** Mixing graphite as a negative active material, styrene-butadiene rubber (SBR), and carboxymethyl cellulose (CMC) at a mass ratio of 98: 1: 1, and adding deionized water as a solvent to form a slurry in which the solid content is 50 wt%, and stirring well. Applying the slurry evenly onto one surface of an 8 µm-thick copper foil, and drying the slurry at 110 °C to obtain a third active material layer. Repeating the above steps on the other surface of the copper foil to obtain a fourth active material layer. Performing steps such as cold-pressing and cutting to obtain a second electrode plate 22 of 1512 mm (length) × 71.7 mm (width) × 100 µm (thickness) in size. Connecting a second conductive plate onto the second electrode plate.

**Preparing an electrolyte solution:** Mixing ethylene carbonate (EC) and diethyl carbonate (DEC) at a mass ratio of 1: 1 in a dry argon atmosphere to form an organic solvent, and then adding 5 wt% fluoroethylene carbonate (FEC), 5 wt% 1,3-propane sultone (PS), and a lithium salt lithium hexafluorophosphate (LiPF₆) into the organic solvent to dissolve, and stirring well to obtain an electrolyte solution in which the lithium salt concentration is 1 mol/L.

**Preparing a battery:** Stacking the first electrode plate, the separator, and the second electrode plate in sequence, and winding the stacked structure to obtain an electrode assembly. Using a 7 µm-thick polyethylene (PE) film as a separator. After completion of the winding, the outermost coil of the electrode assembly is the first electrode plate, the first bent section of the first electrode plate is a single-side-coated region, and both the second bent section and the ending straight section of the first electrode plate are blank foil regions. Next, bonding a first bonding layer is to the outer surface of the first bent section, and extending the first bonding layer to the outer surface of the ending straight section. The first bonding layer is a single-sided tape in which the binder is polypropylene. Subsequently, injecting an electrolyte solution and performing chemical formation and packaging to make a battery with a capacity of 5.3 Ah and a mass of 77 g.

### Embodiment 2

Different from Embodiment 1 in that, not only the first bonding layer is applied, but also a second bonding layer is bonded to the outer surface of the second bent section, and the second bonding layer is a single-sided tape in which the binder is polypropylene.

### Embodiment 3

Different from Embodiment 1 in that, not only the first bonding layer is applied, but also a third bonding layer is bonded to the inner surface of the second bent section, and the third bonding layer is a single-sided tape in which the binder is polypropylene.

### Embodiment 4

Different from Embodiment 1 in that, not only the first bonding layer is applied, but also a second bonding layer and a third bonding layer are bonded to the outer surface and the inner surface of the second bent section respectively.

### Comparative Embodiment

Different from Embodiment 1 in that all of the first bonding layer, the second bonding layer, and the third bonding layer are omitted.

Performing a drop test on 20 batteries prepared in each embodiment and each comparative embodiment. The drop test includes the following specific steps: 1) recording the open-circuit voltage and the internal resistance of the battery at 23±2 °C by using a multimeter manufactured by Dongguan LiJia Precision Instrument Co., Ltd. (model: LNG-SY1-0020-DQ); 2) putting the battery into a jig chamber, and dropping the jig chamber with the battery from a height of 1.5 m to a cement bottom plate for 5 rounds by using an automatic drop device. In each round, the parts that hit the cement bottom plate are the bottom, the left lateral face, the right lateral face, the reverse side, the obverse side, the top, the upper left corner, the upper right corner, the lower left corner, and the lower right corner of the jig chamber respectively, so that the five rounds are equivalent to dropping 50 times in one cycle; 3) measuring the voltage of the battery upon completion of each round, and stopping the drop test when the battery catches fire or leaks the electrolyte solution, or, if no fire or leakage occurs, continuing the drop test until five rounds are completed; and 4) leaving the battery that survive the five rounds of drop to stand for 24 hours, and measuring and recording the voltage and internal resistance of the battery, disassembling the battery, and observing whether the outermost first electrode plate is torn. The test results are recorded in Table 1.

**Table 1**

| | Type of bonding layer | Tear percentage |
|---|---|---|
| Embodiment 1 | First bonding layer | 10/20 |
| Embodiment 2 | First and second bonding layers | 4/20 |
| Embodiment 3 | First and third bonding layers | 6/20 |
| Embodiment 4 | First to third bonding layers | 0/20 |
| Comparative Embodiment | No | 15/20 |

| | | |
|---|---|---|
| Note: The tear percentage X/20 means that the number of torn specimens per 20 tested specimens is X. | | |

As can be seen from the data in Table 1, in contrast to the comparative embodiment, Embodiment 1 can provide insulating protection for the first bent section by bonding a first bonding layer to the outer surface of the first bent section, thereby reducing the risk of tearing the battery in the drop test. In contrast to Embodiment 1, a second bonding layer and a third bonding layer are added in Embodiment 2 and Embodiment 3 respectively, thereby providing insulating protection for the second bent section, and further reducing the risk of tearing the battery. The second bonding layer can directly cushion and absorb the impact force born by the electrode assembly when the battery is dropped. Therefore, the tear percentage in Embodiment 2 is lower than that in Embodiment 3. In contrast to Embodiments 1 to 3, a first bonding layer, a second bonding layer, and a third bonding layer are disposed in Embodiment 4 at the same time, thereby minimizing the risk of tearing the battery.

### Embodiments 5 to 12

Different from Embodiment 1 in the weight of the electrode assembly and/or the corresponding adhesive percentage.

### Embodiments 13 to 20

Different from Embodiment 2 in the weight of the electrode assembly and/or the corresponding adhesive percentage.

Subsequently, 20 batteries prepared in each embodiment are subjected to a drop test. The test results are recorded in Table 2.

**Table 2**

| | Type of bonding layer | Mass of electrode assembly | Adhesive percentage | Tear percentage |
|---|---|---|---|---|
| Embodiment 1 | First bonding layer | 77 g | 15% | 10/20 |
| Embodiment 5 | First bonding layer | 77 g | 20% | 9/20 |
| Embodiment 6 | First bonding layer | 77 g | 25% | 8/20 |
| Embodiment 7 | First bonding layer | 77 g | 30% | 7/20 |
| Embodiment 8 | First bonding layer | 77 g | 13% | 13/20 |
| Embodiment 9 | First bonding layer | 55 g | 5% | 9/20 |
| Embodiment 10 | First bonding layer | 55 g | 10% | 7/20 |
| Embodiment 11 | First bonding layer | 55 g | 15% | 5/20 |
| Embodiment 12 | First bonding layer | 55 g | 3% | 10/20 |
| Embodiment 2 | First and second bonding layers | 77 g | 30% | 4/20 |
| Embodiment 13 | First and second bonding layers | 77 g | 40% | 3/20 |
| Embodiment 14 | First and second bonding layers | 77 g | 50% | 3/20 |
| Embodiment 15 | First and second bonding layers | 77 g | 60% | 2/20 |
| Embodiment 16 | First and second bonding layers | 77 g | 28% | 7/20 |
| Embodiment 17 | First and second bonding layers | 55 g | 10% | 5/20 |
| Embodiment 18 | First and second bonding layers | 55 g | 20% | 3/20 |
| Embodiment 19 | First and second bonding layers | 55 g | 30% | 2/20 |
| Embodiment 20 | First and second bonding layers | 55 g | 8% | 6/20 |

As can be seen from the data in Table 2, when the first bonding layer is applied to the battery, the adhesive percentage of the battery also affects the number of torn specimens in the drop test. In contrast to Embodiment 1 and Embodiments 5 to 7, when the mass of the electrode assembly is greater than or equal to 60 grams, the risk of tearing in the drop test of the battery is increased due to a relatively low adhesive percentage in Embodiment 8. In contrast to Embodiments 9 to 11, when the mass of the electrode assembly is less than 60 grams, the risk of tearing in the drop test of the battery is increased due to a relatively low adhesive percentage in Embodiment 12.

Similarly, when both the first bonding layer and the second bonding layer are applied to the battery, the adhesive percentage of the battery also affects the number of torn specimens in the drop test. In contrast to Embodiment 2 and Embodiments 13 to 15, when the mass of the electrode assembly is greater than or equal to 60 grams, the risk of tearing in the drop test of the battery is increased due to a relatively low adhesive percentage in Embodiment 16. In contrast to Embodiments 17 to 19, when the mass of the electrode assembly is less than 60 grams, the risk of tearing in the drop test of the battery is increased due to a relatively low adhesive percentage in Embodiment 20.

### Embodiment 21

Different from Embodiment 1 in an aerogel block disposed between the head of the electrode assembly and the housing. The aerogel block is formed by curing a mixture of 10% wt binder and 90% wt silicon-based aerogel. The compressive elastic modulus K of the filler is 0.5 MPa after absorbing the free electrolyte solution.

### Embodiments 22 to 26

Different from Embodiment 21 in the compressive elastic modulus K of the filler.

Next, 20 batteries prepared in each embodiment are subjected to a drop test. The test results are recorded in Table 3.

**Table 3**

| | Type of bonding layer | Filler and position thereof | Compressive elastic modulus K | Tear percentage |
|---|---|---|---|---|
| Embodiment 1 | First bonding layer | No | / | 10/20 |
| Embodiment 21 | First bonding layer | Head of electrode assembly | 0.5 MPa | 7/20 |
| Embodiment 22 | First bonding layer | Head of electrode assembly | 0.8 MPa | 6/20 |
| Embodiment 23 | First bonding layer | Head of electrode assembly | 1.0 MPa | 4/20 |
| Embodiment 24 | First bonding layer | Head of electrode assembly | 2 MPa | 3/20 |
| Embodiment 25 | First bonding layer | Head of electrode assembly | 2.2 MPa | 5/20 |
| Embodiment 26 | First bonding layer | Head of electrode assembly | 0.48 MPa | 8/20 |

As can be seen from the data in Table 3, when the first bonding layer is applied to the battery, the existence of the filler in the battery also affects the number of torn specimens in the drop test. In contrast to Embodiment 1, the risk of tearing in the drop test of the battery in Embodiment 2 is reduced when a filler is disposed between the head of the electrode assembly and the housing. In contrast to Embodiment 1 and Embodiments 21 to 25, the compressive elastic modulus K of the filler in Embodiment 26 is relatively low. The free electrolyte solution absorbed by the aerogel block is extruded and impacts the electrode assembly in the drop test, so that the risk of tearing in the drop test of the battery is increased. In contrast to Embodiment 24, the compressive elastic modulus K of the filler in Embodiment 25 is relatively high. Therefore, the amount of deformation and the cushioning effect of the filler in the drop test are reduced, so that the risk of tearing in the drop test of the battery is increased.

What is disclosed above is merely exemplary embodiments of this application, and in no way constitutes a limitation on this application. Therefore, any and all equivalent variations made based on this application still fall within the scope covered by this application.

## Claims

1. An electrochemical device (100), comprising a housing (10) and an electrode assembly (20) disposed in the housing (10);
the electrode assembly (20) is a flat jelly-roll structure and comprises a first electrode plate (21), a second electrode plate (22), and a separator (23) disposed between the first electrode plate (21) and the second electrode plate (22); the first electrode plate (21) comprises a first current collector (210), a first active material layer (211), and a second active material layer (212);
the first current collector (210) comprises an inner surface (210a) oriented toward a winding center axis of the electrode assembly (20) and an outer surface (210b) oriented away from the inner surface (210a);
at least a part of the inner surface (210a) is coated with the first active material layer (211), and at least a part of the outer surface (210b) is coated with the second active material layer (212);
an outermost coil of the electrode assembly (20) is a part of the first electrode plate (21), the outermost first electrode plate (21) comprises an ending straight section (2104) and a first bent section (2101) adjacent to the ending straight section (2104), and the first bent section (2101) is not directly connected to the ending straight section (2104), wherein
an inner surface of the first bent section (2101) is coated with the first active material layer (211), and an outer surface of the first bent section (2101) is coated with a first bonding layer (50); and
the first bonding layer (50) extends to an outer surface of the ending straight section (2104), and the first bonding layer (50) connects the first bent section (2101) and the ending straight section (2104).

2. The electrochemical device (100) according to claim 1, **characterized in that** the outermost first electrode plate (21) further comprises a second bent section (2103) connected to the ending straight section (2104);
an inner surface of the second bent section (2103) is not coated with the first active material layer (211), and an outer surface of the second bent section (2103) is not coated with the second active material layer (212); and
the outer surface of the second bent section (2103) is coated with a second bonding layer (60).

3. The electrochemical device (100) according to claim 2, **characterized in that** the second bonding layer (60) extends to the outer surface of the ending straight section (2104).

4. The electrochemical device (100) according to claim 2, **characterized in that** the inner surface of the second bent section (2103) is coated with a third bonding layer (70).

5. The electrochemical device (100) according to claim 4, **characterized in that** the third bonding layer (70) extends to an inner surface of the ending straight section (2104).

6. The electrochemical device (100) according to any one of claims 1-5, **characterized in that** a filler (80) is disposed between the electrode assembly (20) and the housing (10), the filler (80) comprises an aerogel block and a free electrolyte solution absorbed by the aerogel block, and a compressive elastic modulus K of the filler (80) satisfies: 0.5 MPa ≤ K.

7. The electrochemical device (100) according to claim 6, **characterized in that** 0.5 MPa ≤ K < 2 MPa.

8. The electrochemical device (100) according to claim 6 or 7, **characterized in that**, in a direction of the winding center axis, the filler (80) is disposed between a top of the electrode assembly (20) and the housing (10); and/or, the filler (80) is disposed between a bottom of the electrode assembly (20) and the housing (10).

9. The electrochemical device (100) according to claim 3, **characterized in that**, viewed from a direction of the winding center axis, a length of the first bonding layer (50) located in the ending straight section (2104) is not more than 5 mm, and a length of the second bonding layer (60) located in the ending straight section (2104) is not more than 5 mm.

10. The electrochemical device (100) according to claim 4, **characterized in that** the outermost first electrode plate (21) further comprises a straight connecting section connected to both the first bent section (2101) and the second bent section (2103), the third bonding layer (70) extends to an inner surface of the straight connecting section (2102); and, in a thickness direction of the electrode assembly (20), a tail portion of the second electrode plate (22) in a winding direction of the electrode assembly (20) overlaps the third bonding layer (70) located in the straight connecting section (2102).

11. The electrochemical device (100) according to claim 10, **characterized in that** a tail portion of the first active material layer (211) in the winding direction is located in the straight connecting section (2102), and the third bonding layer (70) located in the straight connecting section (2102) further extends to the tail portion of the first active material layer (211).

12. The electrochemical device (100) according to claim 11, **characterized in that**, viewed from a direction of the winding center axis, a length of the third bonding layer (70) located on the first active material layer (211) is not more than 2 mm.

13. The electrochemical device (100) according to claim 2, **characterized in that** a mass of the electrode assembly (20) is greater than or equal to 60 grams, an area of the first bonding layer (50) is defined as S1, an area of the second bonding layer (60) is defined as S2, an outer peripheral area of the outermost first electrode plate (21) is defined as S0, and the electrochemical device (100) satisfies at least one of the following conditions:
15% ≤ S1/S0 ≤ 30%; or
30% ≤ (S1 + S2)/S0 ≤ 60%.

14. The electrochemical device (100) according to claim 2, **characterized in that** a mass of the electrode assembly (20) is less than 60 grams, an area of the first bonding layer (50) is defined as S1, an area of the second bonding layer (60) is defined as S2, an outer peripheral area of the outermost first electrode plate (21) is defined as S0, and the electrochemical device (100) satisfies at least one of the following conditions:
5% ≤ S1/S0 < 15%; or
10% ≤ (S1 + S2)/S0 < 30%.

15. An electronic device (1), comprising an accommodation chamber (1001), **characterized in that** the electronic device (1) further comprises the electrochemical device (100) according to any one of claims 1 to 14, and the electrochemical device (100) is disposed in the accommodation chamber (1001).
